# EUROPÄISCHE PATENTSCHRIFT

(11) **EP 1 092 489 B1**
(45) Veröffentlichungstag und Bekanntmachung des Hinweises auf die Patenterteilung: **18.09.2002**
(21) Anmeldenummer: 99120499.1
(22) Anmeldetag: 15.10.1999
(51) Int. Cl.: B21D 53/26, B62D 55/14

(54) **Verfahren zum Herstellen eines Laufrades für Kettenfahrzeuge**
Method for manufacturing a roller for tracked vehicle
Procédé de fabrication d'un galet de roulement pour véhicule chenillé

(43) Veröffentlichungstag der Anmeldung: 18.04.2001
(73) Patentinhaber: Rothe Erde GmbH, 44137 Dortmund (DE)
(72) Erfinder: Spintig, Wilfried, Dr.-Ing., 59558 Lippstadt (DE); Wozniak, Johannes, Dr.-Ing., 59555 Lippstadt (DE)
(74) Vertreter: John, Ernst, Dipl.-Ing.

(56) Entgegenhaltungen:
- EP-A- 0 111 048
- DE-A- 19 723 073
- DE-C- 4 323 167

## Beschreibung

Die Erfindung betrifft ein Verfahren zum Herstellen eines Laufrades, das aus mindestens einer rotationssymmetrisch zu einer Radachse ausgebildeten Radschüssel besteht, für Kettenfahrzeuge, wobei die Radschüssel, die einen um die Radachse angeordneten inneren Nabenbereich, einen äußeren Umfangsbereich und einen dazwischen angeordneten Übergangsbereich aufweist, durch Drückwalzen und Projizierstreckdrücken aus einer ebenen Ronde aus Stahl in eine vorgegebene Rohform überführt und der Nabenbereich und der Umfangsbereich durch spanabhebende Bearbeitung ihre endgültige Form erhalten. Dabei soll unter der Rohform der Radschüssel diejenige Form verstanden werden, die durch reines Umformen entsteht und die - mit Ausnahme der spanabhebend bearbeiteten Flächen - der endgültigen Form auch hinsichtlich der geforderten Toleranzen entspricht.

Ein solches Verfahren ist aus der EP 0 111 048 B1 bekannt. Bei nach dem aus dieser Schrift bekannten Verfahren hergestellten Laufrädem, die aus zwei Hälften in Form von Radschüsseln bestehen, kann es bei großen Beanspruchungen infolge hoher Radlasten und/oder infolge schneller Fahrt über unebenen Grund zu Verformungen an den Laufrädern und einer entsprechenden Beeinträchtigung der Laufruhe des Kettenfahrzeugs oder gar zu einer vollständigen Zerstörung der Radschüssel bzw. des Laufrades kommen.

Der Erfindung liegt die Aufgabe zu Grunde, das Verfahren der eingangsgenannten Art zum Herstellen eines Laufrades dahingehend zu verändern, daß Laufräder mit höherer Festigkeit hergestellt werden können.

Diese Aufgabe wird dadurch gelöst, daß die Radschüssel nach dem Herstellen der vorgegebenen Rohform vergütet und nach dem Vergüten - und einem dadurch bedingten, entsprechenden Vergrößem der Form - und vor dem spanabhebenden Bearbeiten des Naben- und des Umfangsbereichs durch Drückwalzen und Projizierstreckdrücken erneut in die vorgegebene Rohform gebracht wird.

Bei Versuchen hat sich gezeigt, daß sich beim bloßen Hinzufügen des an sich bekannten Vergütungsvorgangs beim Herstellen einer Radschüssel nach dem Drückwalzen und Projizierstreckdrücken starke Unrundheiten ergeben, so daß sich die Radschüsseln für eine Serienproduktion von Kettenfahrzeugen nicht eignen. Die Erfindung sieht denn auch vor, die Radschüssel vor dem Vergüten bereits einmal in die endgültige Rohform zu bringen und die beim Vergüten entstehenden Unrundheiten und Formvergrößerungen der Radschüssel anschließend in einem weiteren, dem Vergüten folgenden Drückwalz- bzw. Projizierstreckdrückvorgang zu eliminieren und dabei gleichzeitig die vorgegebene Rohform wiederherzustellen.

Durch das erfindungsgemäß vorgesehene Verfahren können mit großer Zuverlässigkeit Radschüsseln aufweisende Laufräder höherer Festigkeit hergestellt werden, mit denen entsprechend schwerere Kettenfahrzeuge mit höherer Geschwindigkeit gefahren werden können. Durch die erreichbare höhere Festigkeit kann auch auf das zusätzliche Anbringen eines Verschleißringes, wie er nach der EP 0 111 048 B1 zur Erhöhung der Verschleißfestigkeit vorgesehen ist, verzichtet werden.

Weiterbildungen der Erfindung sind in den Unteransprüchen beschrieben. So wird nach Anspruch 2 vorgesehen, daß beim erneuten Drückwalzen und Projizierstreckdrücken nach dem Vergüten das Innenwerzeug der ggf. letzten Umformstufe vor dem Vergüten oder ein formgleiches Innenwerkzeug verwendet wird. Das bedeutet in jedem Fall eine vereinfachte Werkzeughaltung. Bei kleinen Stückzahlen kann sogar dieselbe Maschinen mit demselben Werkzeug verwendet werden.

Zur Herstellung einer Radschüssel wird vorzugsweise ein Vergütungsstahl mit mindestens 1 % Chrom und mindestens 0,2 % Molybdän verwendet, der auf eine Festigkeit von 1150 bis 1250 N mm⁻² vergütet wird.

Damit die Verformungen der Radschüssel beim Vergüten möglichst klein ausfallen, ist ferner vorgesehen, daß die Radschüssel der Wärmeeinbringung eines Vergütungsvorgangs in einem Salzbad oder in einem Vakuumofen unterzogen wird.

Ein Ausführungsbeispiel der Erfindung wird im folgenden an Hand der weitgehend schematisch dargestellten Zeichnung und näher erläutert. Es zeigen jeweils in einem auszugsweisen Längsschnitt
- Fig. 1: die Radschüssel beim letzten Arbeitsvorgang zum Herstellen einer vorgegebenen Rohform und
- Fig. 2: die Radschüssel beim erneuten Herstellen der vorgegebenen Rohform nach dem Vergüten.

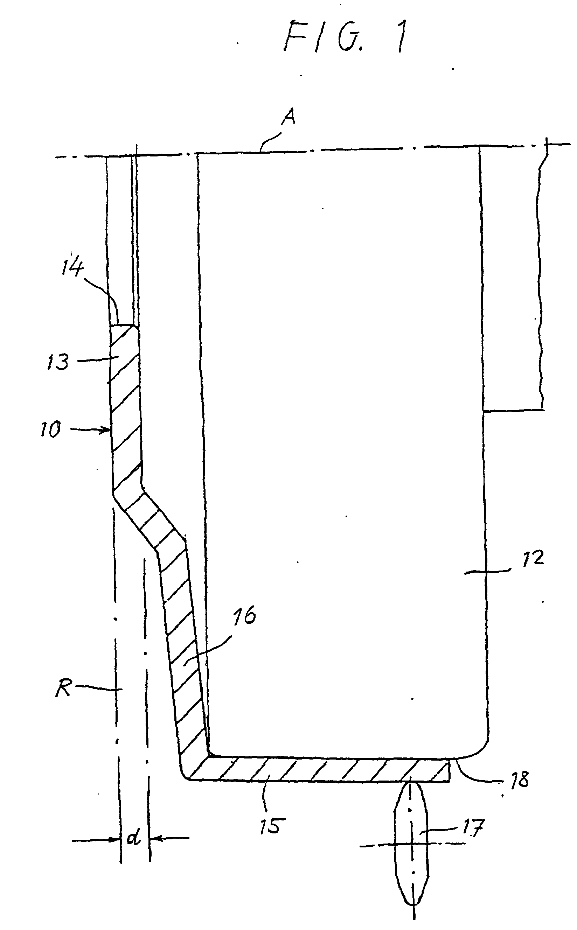

Zur Herstellung einer Radschüssel 10 wird eine ebene, mittig gelochte Ronde *R* aus Vergütungsstahl 42CrMo4 mit einer Dicke *d* durch ein Spannwerkzeug 11, in bekannter Weise gegen ein rotierbares Innenwerkzeug gespannt und durch Drückwalzen und Projizierstreckdrücken in eine vorgegebene Rohform umgeformt. Dieser Umformvorgang erfolgt bei einer Form der Radschüssel, wie sie in Fig. 1 dargestellt ist, in mehreren Stufen mit entsprechend vielen Innenwerkzeugen. Dabei weist die Radschüssel 10 einen Nabenbereich 13 mit einer zentrischen Ausnehmung 14, einen zylindrischen Umfangsbereich 15 und einen dazwischen angeordneten Übergangsbereich 16 auf.

In Fig. 1 ist die letzte Umformstufe des Drückwalzens und Projizierstreckdrückens dargestellt, bei der der Umfangsbereich 15 der Radschüssel durch eine Drückrolle 17 an die Umfangsfläche 18 des Innenwerkzeugs 12 gedrückt wird.

Die derart in der vorgegebenen Rohform hergestellte Radschüssel 10 wird von dem Innenwerkzeug 12 abgenommen und als Ganzes in einem Salzbad einem Vergütungsvorgang unterzogen, bei dem die Festigkeit des Stahls auf einen Bereich zwischen 1150 und 1250 N mm⁻² erhöht wird. Alternativ ist es möglich, die Wärmeeinbringung beim Vergüten in einem Vakuumofen vorzunehmen.

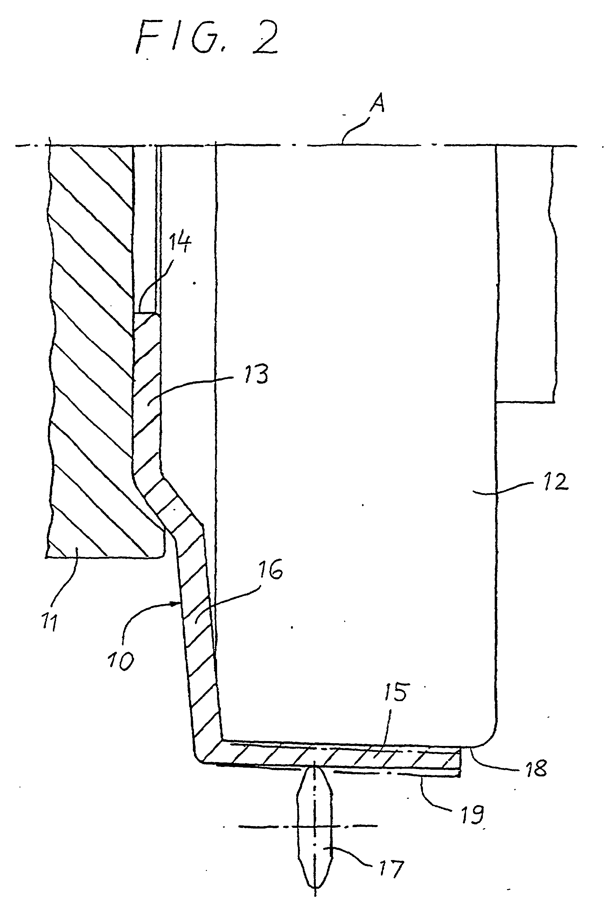

Nach dem Vergüten wird die Radschüssel 10, die sich infolge der Wärmeeinwirkung beim Vergüten in die in Fig. 2 mit strichpunktierten Linien 19 angedeutete Form vergrößert hat, auf das Innenwerkzeug 12 der letzten Umformstufe vor dem Vergüten aufgespannt und erneut durch die Drückrolle 17 an die Umfangsfläche 18 des Innenwerkzeugs 12 gedrückt, so daß die vor dem Vergüten hergestellte vorgegebene Rohform der Radschüssel erneut hergestellt wird.

An diesen Vorgang schließt sich die aus der EP 0 111 048 B1 bekannte spanabhebende Bearbeitung der Radschüssel an, wodurch sie ihre Fertigform erhält.

## Patentansprüche

1. Verfahren zum Herstellen eines Laufrades, das aus mindestens einer rotationssymmetrisch zu einer Radachse (*A*) ausgebildeten Radschüssel (10) besteht, für Kettenfahrzeuge, wobei die Radschüssel (10), die einen um die Radachse (*A*) angeordneten inneren Nabenbereich (13), einen äußeren Umfangsbereich (15) und einen dazwischen angeordneten Übergangsbereich (16) aufweist, durch Drückwalzen und Projizierstreckdrücken aus einer ebenen Ronde (*R* ) aus Stahl in eine vorgegebene Rohform überführt und der Nabenbereich (13) und der Umfangsbereich (15) durch spanabhebende Bearbeitung ihre Fertigform erhalten,
**dadurch gekennzeichnet,**
**daß** die Radschüssel (10) nach dem Herstellen der vorgegebenen Rohform vergütet und nach dem Vergüten - und einem dadurch bedingten, entsprechenden Vergrößern der Form - und vor dem spanabhebenden Bearbeiten des Naben- und des Umfangsbereichs (13 bzw. 15) durch Drückwalzen und Projizierstreckdrücken erneut in die vorgegebene Rohform gebracht wird.

2. Verfahren nach Anspruch 1, **dadurch gekennzeichnet, daß** beim erneuten Drückwalzen und Projizierstreckdrücken nach dem Vergüten das Innenwerzeug (12) der ggf. letzten Umformstufe vor dem Vergüten oder ein formgleiches Innenwerkzeug verwendet wird.

3. Verfahren nach Anspruch 1 oder 2, **dadurch gekennzeichnet, daß** der Stahl der Radschüssel (10) ein Vergütungsstahl mit mindestens 1 % Chrom und mindestens 0,2 % Molybdän ist.

4. Verfahren nach einem der Ansprüche 1 bis 3, **dadurch gekennzeichnet, daß** der Stahl der Radschüssel (10) auf eine Festigkeit von 1150 bis 1250 N mm⁻² vergütet wird.

5. Verfahren nach einem der Ansprüche 1 bis 4, **dadurch gekennzeichnet, daß** die Radschüssel der Wärmeeinbringung eines Vergütungsvorgangs in einem Salzbad unterzogen wird.

6. Verfahren nach einem der Ansprüche 1 bis 4, **dadurch gekennzeichnet, daß** die Wärmeeinbringung beim Vergüten in einem Vakuumofen vorgenommen wird.

## Claims

1. Method of producing a roller, which comprises at least one wheel dish (10) constructed rotationally symmetric to a wheel axis (A), for tracked vehicles, wherein the wheel dish (10), which has an inner hub region (13) disposed around the wheel axis (A), an outer peripheral region (15) and a transition region (16) disposed between these, is reformed by compression rolling and projection straightening from a plane round blank (R) made of steel into a predetermined raw form and the hub region (13) and the peripheral region (15) are given their finished form by machining, **characterised in that**
the wheel dish (10) is tempered after production of the predetermined raw form and after tempering - and a corresponding increase in size of the form resulting from this - and before the machining of the hub and peripheral region (13 and 15 respectively) is once again brought into the predetermined raw form by compression rolling and projection straightening.

2. Method according to Claim 1, **characterised in that** during the renewed compression rolling and projection straightening after tempering, the internal tool (12) of the possibly last reforming stage before tempering or an internal tool of the same form is used.

3. Method according to Claim 1 or 2, **characterised in that** the steel of the wheel dish (10) is a tempering steel with at least 1% chromium and at least 0.2% molybdenum.

4. Method according to one of Claims 1 to 3, **characterised in that** the steel of the wheel dish (10) is tempered to a strength of 1150 to 1250 N mm⁻².

5. Method according to one of Claims 1 to 4, **characterised in that** the wheel dish is subjected to the heat input of a tempering process in a salt bath.

6. Method according to one of Claims 1 to 4, **characterised in that** the heat input during tempering is conducted in a vacuum furnace.

## Revendications

1. Procédé de fabrication d'un galet de roulement pour des véhicules chenillés, qui comprend au moins une cuvette de galet (10) conçue avec une symétrie de révolution par rapport à un axe de galet (A), ladite cuvette de galet (10) qui présente une zone de moyeu (13) intérieure disposée autour de l'axe du galet (A), une zone périphérique extérieure (15) et une zone de transition (16) située entre les deux, étant amenée, par emboutissage au tour et repoussage à projection, à partir d'un rond (R) plat en acier à une forme brute prédéterminée et la zone du moyeu (13) et la zone périphérique (15) recevant leur forme définitive par usinage par enlèvement de copeaux, **caractérisé en ce que** la cuvette de galet (10), après la fabrication de la forme brute prédéterminée, est soumise à un traitement par trempe et revenu et, après le traitement, et un agrandissement correspondant de la forme qui en résulte, et avant l'usinage par enlèvement de copeaux de la zone du moyeu et de la zone périphérique (13 respectivement 15), est amenée de nouveau dans la forme brute prédéterminée par emboutissage au tour et repoussage à projection.

2. Procédé selon la revendication 1, **caractérisé en ce que**, lors du nouvel emboutissage au tour et repoussage à projection faisant suite au traitement par trempe et revenu, on utilise l'outil intérieur (12) de la dernière phase de formage précédant le traitement ou un outil intérieur de même forme.

3. Procédé selon la revendication 1 ou 2, **caractérisé en ce que** l'acier de la cuvette de galet (10) est un acier traité par trempe et revenu avec au moins 1% de chrome et au moins 0,2% de molybdène.

4. Procédé selon l'une quelconque des revendications 1 à 3, **caractérisé en ce que** l'acier de la cuvette de galet (10) est traité par trempe et revenu pour obtenir une résistance de 1150 à 1250 Nmm⁻².

5. Procédé selon l'une quelconque des revendications 1 à 4, **caractérisé en ce que** la cuvette de galet est soumise à la montée en chaleur d'un processus de traitement de trempe et revenu dans un bain salin.

6. Procédé selon l'une quelconque des revendications 1 à 4, **caractérisé en ce que** la montée en chaleur lors du traitement par trempe et revenu a lieu dans un four à vide.
